## Europäisches Patentamt

## European Patent Office

## Office européen des brevets

(19)

(11) Veröffentlichungsnummer: **0 122 908**
**B1**

(12)

# EUROPÄISCHE PATENTSCHRIFT

(45) Veröffentlichungstag der Patentschrift:
**03.06.87**

(51) Int. Cl.⁴: **C 02 F 1/20,** B 01 D 19/00

(21) Anmeldenummer: **84890040.3**

(22) Anmeldetag: **06.03.84**

(54) **Verfahren zur Trennung von verunreinigten Flüssigkeitsgemischen.**

(30) Priorität: **11.03.83 AT 880/83**

(43) Veröffentlichungstag der Anmeldung:
**24.10.84 Patentblatt 84/43**

(45) Bekanntmachung des Hinweises auf die Patenterteilung:
**03.06.87 Patentblatt 87/23**

(84) Benannte Vertragsstaaten:
**AT BE CH DE FR GB IT LI NL SE**

(56) Entgegenhaltungen:
**EP - A - 0 005 138**
**EP - A - 0 080 420**
**EP - A - 0 099 320**
**DE - A - 1 517 479**
**DE - A - 2 935 078**
**FR - A - 598 498**
**FR - A - 2 342 251**
**GB - A - 490 022**
**US - A - 3 528 890**
**US - A - 3 898 058**

(73) Patentinhaber: **Innova Wiener Innovationsgesellschaft m.b.H., Beatrixgasse 1, A-1030 Wien III (AT)**

(72) Erfinder: **Schrems, Emil, Neustift a. Walde 41, A-1190 Wien (AT)**

(74) Vertreter: **Rippel, Andreas, Dipl.-Ing., Maxingstrasse 34, A-1130 Wien (AT)**

## Beschreibung

Die Erfindung betrifft ein Verfahren zur Trennung von verunreinigten Flüssigkeitsgemischen, insbesondere zur Eliminierung von Schadstoffen, z.B. Kohlenwasserstoffen, Phenolen u. dgl. aus Wasser.

Mit Kohlenwasserstoffen und Phenolen verunreinigte Wässer wurden nach dem derzeitigen Stand der Technik dadurch gereinigt, dass diese über Aktivkohlefilter geleitet werden, welche die Kohlenwasserstoffe und Phenole zurückhalten. Diese Vorgangsweise ist sehr kostenintensiv in der Herstellung der Anlage, im Betrieb und auch in der Wartung. So können etwa derzeit verfügbare Kohlen bei einer Restkonzentration im Wasser von weniger als 25 µg/l nur ca. 1% des Eigengewichtes an chlorierten Kohlenwasserstoffen adsorbieren. Bei einer durchschnittlichen Belastung von 200 µg/l chlorierter Kohlenwasserstoffe würde eine Filtereinheit für die Aufbereitung des Trinkwasserbedarfs von 1000 Einwohnern pro Jahr mindestens 1300 kg Aktivkohle (ca. 3,5–4 m$^3$) erfordern.

Das eigentliche kostenmässige und technische Kriterium stellt jedoch die Reaktivierung (Regenerierung) der Aktivkohle dar. Diese Regenerierung ist notwendig, da die Aktivkohle einerseits einen Wertstoff darstellt (öS 4000.– bis 6000.–/100 kg), anderseits eine Lagerung der beladenen Kohle auf Deponien nicht in Frage kommt. Der Aufwand für die Errichtung und Erhaltung von Reaktivierungsanlagen ist jedoch hoch.

Die US-A-3 898 058 beschreibt ein Verfahren zur Trennung von Kohlenwasserstoffe enthaltenden Verunreinigungen aus Wasser, wobei das Wasser durch einen mit Füllkörpern versehenen Behälter fliesst. Am oberen Teil des Behälters wird eine Vakuumpumpe angeschlossen, wobei Dampf und die Kohlenwasserstoffe enthaltenden Verunreinigungen durch das Abflussrohr abgezogen werden. Reines Wasser fliesst aus dem unteren Teil des Behälters durch den Auslass. Durch die Anordnung von Füllkörpern, zwischen denen das Wasser fliessen muss, soll die der Verdampfung ausgesetzte Oberfläche vergrössert werden.

Nach der DE-A-29 35 078 wird zur Entfernung von leichtflüchtigen organischen Stoffen das Rohwasser mittels Unterdruck durch einen Filterkessel durchgesaugt, so dass es oberhalb des Filters zerstäubt wird.

Der Erfindung liegt die Aufgabe zugrunde, ein Verfahren der vorerwähnten Art so auszugestalten, dass die aufgezeigten Nachteile weitgehendst vermieden werden und eine Entfernung der Schadstoffe aus Flüssigkeiten in einfachster Weise ermöglicht wird. Erreicht wird dieses Ziel dadurch, dass zur Anreicherung der Schadstoffe das Flüssigkeitsgemisch direkt aus der Zufuhrleitung in eine Vakuumkammer gesprüht wird, so dass es in den Siedezustand übergeführt wird, und dass die Schadstoffe unmittelbar mit dem Dampf der Hauptflüssigkeit als Trägergas abgeführt werden und die verbleibende gereinigte Flüssigkeit abgeleitet wird. Das erfindungsgemässe Verfahren macht von dem Umstand Gebrauch, dass Flüssigkeiten auch bei Raumtemperatur und darunter liegenden Temperaturen zum Sieden gebracht werden können, wenn der Druck entsprechend herabgesetzt wird. Der Druck kann hiebei bis zur Erreichung des Dampfdruckes der entsprechenden Flüssigkeit gesenkt werden. Enthält die Flüssigkeit, z.B. das Wasser, Schadstoffe wie Kohlenwasserstoffe und Phenole, deren Dampfdruck bei gleicher Temperatur höher ist als der Dampfdruck der Hauptflüssigkeit (Wasser) oder weisen die Schadstoffe wasserdampfflüchtige Eigenschaften auf, so werden sie durch die Behandlung (Vakuumbehandlung) nach dem erfindungsgemässen Verfahren von der flüssigen in die gasförmige Phase übergeführt, können solcherart mit dem Wasserdampf als Trägergas aus der Hauptflüssigkeit eliminiert werden. Unter Anwendung des erfindungsgemässen Verfahrens können etwa auch das höher als Wasser siedende Tetrachloräthylen (121 °C) abgetrennt werden. Hierbei liegt nämlich ein azeotropes Gemisch vor mit einem Siedeminimum bei 88,5 °C und einer Konzentration von 82,8 Gew.-% Tetrachloräthylen.

Zur Ausübung des erfindungsgemässen Verfahrens kann in weiterer Ausgestaltung der Erfindung eine Vakuum-Destillationsanlage vorgesehen werden, bei der das Flüssigkeitsgemisch mittels mindestens einer Zerstäubungsdüse einem Behälter zuführbar ist, in den eine, an eine Unterdruckquelle, z.B. eine Vakuumpumpe, anschliessbare Leitung zur Abfuhr der Schadstoffe mit dem Dampf der Hauptflüssigkeit als Trägergas mündet und der Behälter weiters mit einer Austragleitung für die gereinigte Hauptflüssigkeit versehen ist, wobei die Austragleitung, in die gegebenenfalls eine Saugpumpe eingebaut ist, in das Unterwasser mündet und die Mündung der Zerstäubungsdüse der Mündung der Leitung für die Abfuhr der Schadstoffe zugekehrt ist. Eine solche Anlage zeichnet sich durch ein Minimum an bewegten Teilen aus. Die Einfachheit der Wartung ist besonders hervorzuheben. Durch die Zerstäubungsdüse wird die Flüssigkeit beim Eintritt in den Behälter, der als Vakuumkessel ausgebildet ist, in eine Vielzahl von Teilchen zerlegt, wodurch das Verhältnis Oberfläche zu Volumenstrom auf ein Vielfaches vergrössert wird, also besonders günstige Verhältnisse für die gewünschte Verdampfung erreicht werden.

Sofern ein relativ grosser Unterschied im Dampfdruck zwischen der Hauptflüssigkeit und den Schadstoffen vorhanden ist, kann in besonderer Ausgestaltung der Erfindung der Behälter als Unterdruckraum einer mit dem Flüssigkeitsgemisch beaufschlagten Injektoranordnung ähnlich einer Wasserstrahlpumpe ausgebildet sein und die Austragleitung in dem an den Unterdruckraum anschliessenden Bereich als Diffusor ausgebildet sein. Im Behälter bildet sich infolge der Geschwindigkeitserhöhung des Strahles ein entsprechend hohes Vakuum aus, in welchem die Schadstoffe in die Gasphase übertreten können.

Der gereinigte Flüssigkeitsstrahl tritt anschliessend an den Behälter in den Diffusor ein, wo infolge Geschwindigkeitsverringerung sich wieder eine Druckerhöhung einstellt.

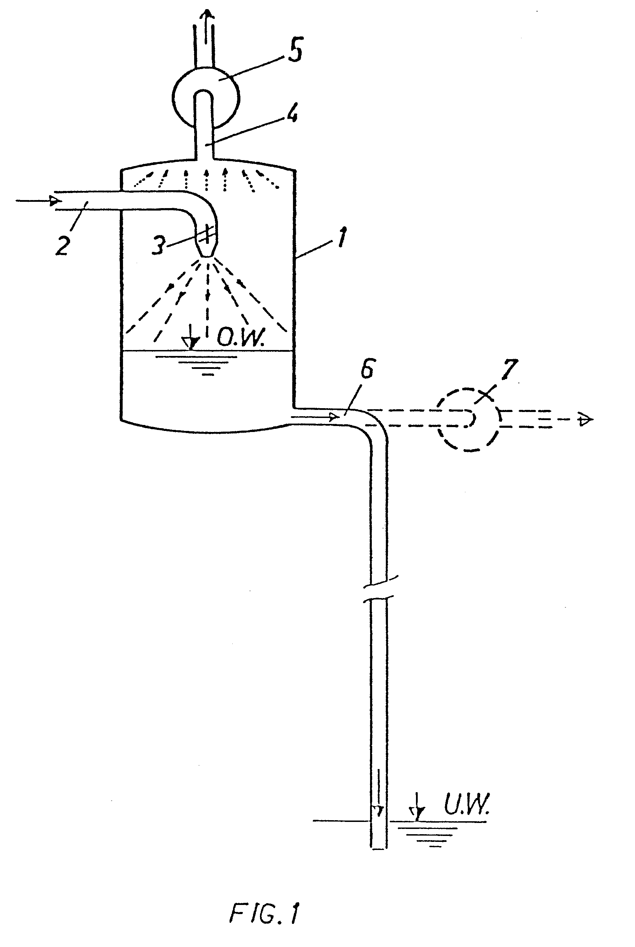

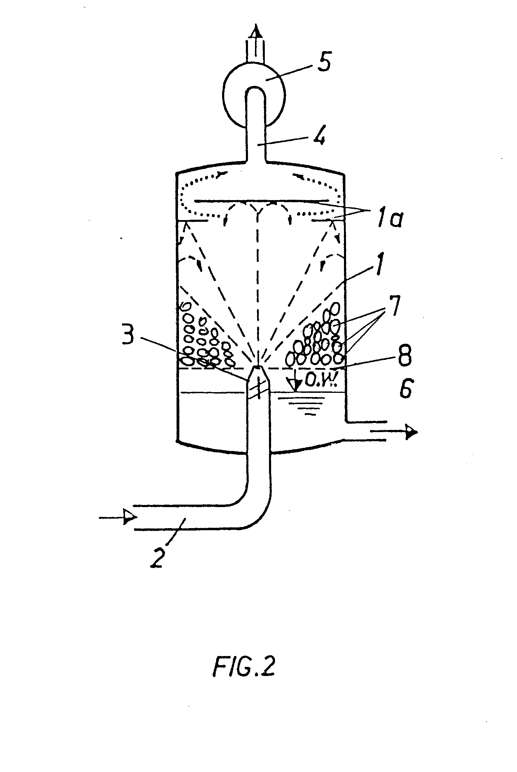

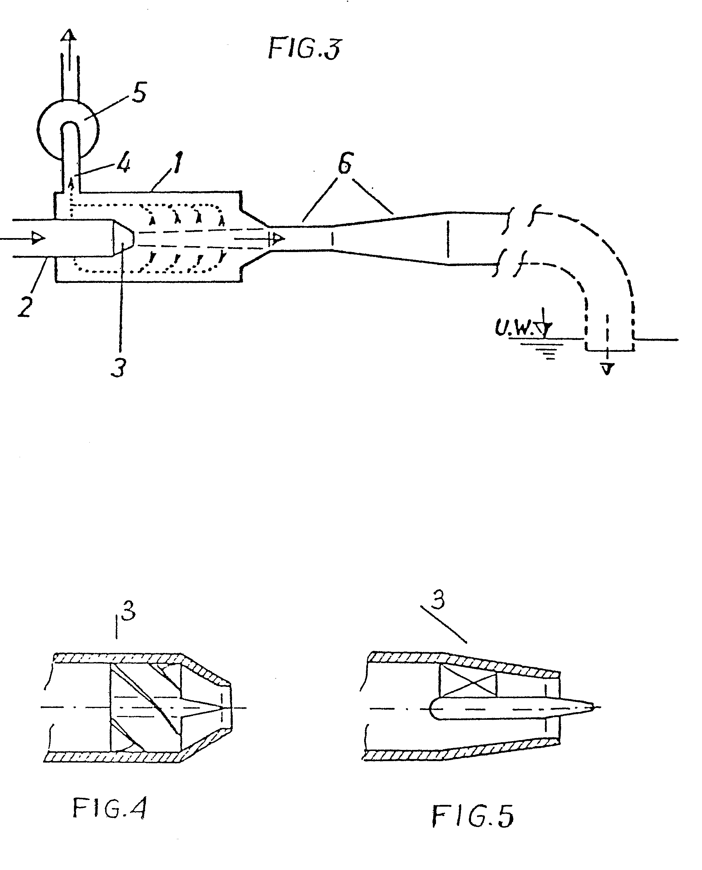

Die Erfindung wird nachstehend sowohl was das Verfahren als auch die Anlage betrifft, anhand von in der Zeichnung dargestellten Ausführungsbeispielen näher erläutert. Es zeigen, Fig. 1 eine erste Ausführungsform einer für die Durchführung des erfindungsgemässen Verfahrens geeigneten Vakuum-Destillationsanlage in einem Längsschnitt, Fig. 2 in einem Längsschnitt eine gegenüber der in Fig. 1 dargestellten Ausführungsform abgeänderte Ausführungsform, Fig. 3 eine weitere Ausführungsform einer zur Durchführung des erfindungsgemässen Verfahrens geeigneten Vakuum-Destillationsanlage, und die Fig. 4 und 5 in einem Axiallängsschnitt unterschiedlich ausgebildete Details aus Fig. 3.

Bei der Ausführungsform gemäss Fig. 1 wird die mit den Schadstoffen verunreinigte Flüssigkeit über eine Leitung 2 einem Behälter 1, der als Vakuumkessel ausgebildet ist, zugeführt. Die Leitung 2 weist hiebei eine oder mehrere Zerstäubungsdüsen 3 auf. Durch die in der Zerstäubungsdüse 3 eingebaute Prallvorrichtung wird die Flüssigkeit beim Eintritt in den Innenraum des Behälters 1 in eine Vielzahl von Teilchen zerlegt, wodurch sich eine grosse Oberfläche, die dem Vakuum ausgesetzt ist, ergibt. Auf diese Art und Weise tritt eine besonders wirkungsvolle Verdampfung und damit eine Überführung der Schadstoffe in die Gasphase ein, sie können dann mit einer entsprechenden Menge an Wasserdampf als Trägergas über eine an dem Behälter 1 angeschlossene Leitung 4 mittels einer Vakuumpumpe 5 abgesaugt werden. Die von den Schadstoffen befreite Flüssigkeit wird dann über eine Austragleitung 6 in das Unterwasser U.W. abgeführt, welches zwecks Aufrechterhaltung des erforderlichen Vakuums im Behälter 1 eine entsprechende Höhenlage unterhalb des Oberwassers O.W. aufweisen muss. Sofern diese Höhenlage des Unterwassers durch natürliche Massnahmen nicht eingehalten werden kann, kann ein Einsatz einer Saugpumpe 7 diesen Mangel kompensieren.

Unterschiedlich zur Ausführungsform gemäss Fig. 1 wird gemäss Fig. 2 die zu reinigende Flüssigkeit über die Leitung 2 von unten in den Behälter 1 über eine oder mehrere Zerstäubungsdüsen 3 eingeführt. Im Weg der aus der Düse 3 austretenden Strahlen sind hiebei Prallbleche 1a angeordnet, die den direkten Weg zur Leitung 4, über die die Schadstoffe gasförmig abgezogen werden, versperren. Auf diese Weise wird eine Vergrösserung der Wegstrecke der Flüssigkeitsteilchen im Vakuum erzielt und somit der Übertritt der Schadstoffe von der flüssigen in die Gasphase entsprechend gefördert. Die in die Gasphase übergeführten Stoffe werden dann wieder zusammen mit Wasserdampf über die Leitung 4 durch die Vakuumpumpe abgesaugt. Die Austragleitung 6 mündet wieder in das in Fig. 2 nicht eingetragene Unterwasser U.W.

Die in Fig. 3 dargestellte Ausführungsvariante empfiehlt sich vor allem, wenn ein relativ grosser Unterschied im Dampfdruck zwischen der Hauptflüssigkeit und den Schadstoffen vorhanden ist. Die Trennung der Schadstoffe von der Hauptflüssigkeit kann hiebei mittels einer Injektoranordnung ähnlich einer Wasserstrahlpumpe vorgenommen werden, deren Unterdruckraum vom Behälter 1 gebildet ist. Im Unterdruckraum bildet sich hiebei infolge der Geschwindigkeitserhöhung des Strahles ein entsprechend hohes Vakuum aus, in welchem die Schadstoffe in die Gasphase übertreten können. Sie werden dann zusammen mit einer entsprechenden Menge Wasserdampf wieder über die Leitung 4 mittels der Vakuumpumpe 5 gesondert abgesaugt. Der solcherart gereinigte Flüssigkeitsstrahl tritt anschliessend in den Mischraum und die im Bereich des Behälters 1 als Diffusor ausgebildete Austragleitung ein, die wieder in das Unterwasser U.W. führt.

In Fig. 2 ist überdies angedeutet, dass in den Behälter 1 Füllkörper 7 eingebracht wurden. Diese liegen auf einem Sieb 8 derart auf, dass die zurückströmende Flüssigkeit über die Füllkörper strömt. Die Füllkörper 7 können aus Steinzeug, Metall, Kunststoff usw. bestehen und haben die Aufgabe, die Flüssigkeit länger im Vakuum zu halten, sodass auch hiedurch der Übertritt der Schadstoffe von der flüssigen in die Gasphase gefördert wird. Es sei jedoch hervorgehoben, dass die Anlage auch ohne Füllkörper funktionsfähig ist.

Damit die Schadstoffmoleküle leichter aus dem Hauptstrahl austreten können, lässt man auf sie Fliehkräfte einwirken, was beispielsweise bei Düsen mit Prallvorrichtungen möglich ist, oder man verwendet eine sogennante Ringdüse, bei welcher die Oberfläche im Verhältnis zum Volumenstrom vergrössert wird. Die Schadstoffe weisen meist einen höheren Dampfdruck als die Hauptflüssigkeit (Wasser) auf und werden im Vakuum in die Gasphase übergeführt. Durch das Vorhandensein anderer Gase ergibt sich nun ein relativ geringer Partialdruck, sodass eine Verflüssigung bei relativ geringem Gegendruck nicht mehr eintreten kann. Die in der Gasphase verbliebenen Schadstoffe können daher auch im sogenannten Unterwasser über den dort vorhandenen freien Flüssigkeitsspiegel gesondert abgeführt werden.

**Patentansprüche**

1. Verfahren zur Trennung von verunreinigten Flüssigkeitsgemischen, insbesondere zur Eliminierung von Schadstoffen, z.B. Kohlenwasserstoffen, Phenolen u. dgl. aus Wasser, dadurch gekennzeichnet, dass zur Anreicherung der Schadstoffe das Flüssigkeitsgemisch direkt aus der Zufuhrleitung in eine Vakuumkammer gesprüht wird, so dass es in den Siedezustand übergeführt wird, und dass die Schadstoffe unmittelbar mit dem Dampf der Hauptflüssigkeit als Trägergas abgeführt werden und die verbleibende gereinigte Flüssigkeit abgeleitet wird.

2. Vakuum-Destillationsanlage zur Ausübung eines Verfahrens nach Anspruch 1, dadurch gekennzeichnet, dass das Flüssigkeitsgemisch mittels mindestens einer Zerstäubungsdüse (3) einem Behälter (1) zuführbar ist, in dem eine, an eine Unterdruckquelle, z.B. eine Vakuumpumpe (5) anschliessbare Leitung (4) zur Abfuhr der Schadstoffe mit dem Dampf der Hauptflüssigkeit als Trägergas mündet und der Behälter (1) weiters mit einer Austragleitung (6) für die gereinigte Hauptflüssigkeit versehen ist, wobei die Austragleitung (6), in die gegebenenfalls eine Saugpumpe (7) eingebaut ist, in das Unterwasser (UW) mündet und die Mündung der Zerstäubungsdüse (3) der Mündung der Leitung (4) für die Abfuhr der Schadstoffe zugekehrt ist (Fig. 2).

3. Vakuum-Destillationsanlage zur Ausübung eines Verfahrens nach Anspruch 1, dadurch gekennzeichnet, dass das Flüssigkeitsgemisch mittels mindestens einer Zerstäubungsdüse (3) einem Behälter (1) zuführbar ist, in dem eine, an eine Unterdruckquelle, z.B. eine Vakuumpumpe (5) anschliessbare Leitung (4) zur Abfuhr der Schadstoffe mit dem Dampf der Hauptflüssigkeit als Trägergas mündet und der Behälter (1) weiters mit einer Austragleitung (6) für die gereinigte Hauptflüssigkeit versehen ist, wobei die Austragleitung (6), in die gegebenenfalls eine Saugpumpe (7) eingebaut ist, in das Unterwasser (UW) mündet, wobei der Behälter (1) als Unterdruckraum einer mit dem Flüssigkeitsgemisch beaufschlagten Injektoranordnung ähnlich einer Wasserstrahlpumpe ausgebildet ist und die Austragleitung (6) in den an den Unterdruckraum anschliessenden Bereich als Diffusor ausgebildet ist.

**Revendications**

1. Procédé pour séparer les composants de liquides pollués, destiné en particulier à l'élimination des agents toxiques, p.e. les carbures d'hydrogène, les phénols etc., de l'eau, caracterisé en ce que pour concentrer les agents toxiques le mélange liquide venant de la conduite d'aménée est injecté directement dans une chambre à vide de sorte que le liquide commence à bouillir et que les agents toxiques sont éliminés immédiatement avec la vapeur du liquide original comme gaz porteur et que le liquide purifié restant est dérivé.

2. Mécanisme de distillation à vide destiné à l'execution d'un procédé selon revendication 1, caracterisé en ce qu'à l'aide d'au moins un atomiseur (3), le mélange liquide peut être améné à un réservoir (1), dans lequel débouche une conduite (4) rattachable à une source de vide, p.e. une pompe à faire le vide (5), pour éliminer les agents toxiques avec la vapeur du liquide original comme gaz porteur; le réservoir (1) en outre équipé d'une conduite de décharge (6) pour le liquide purifié; cette conduite de décharge (6), dans laquelle, le cas échéant, peut être installée une pompe aspirante (7), débouche dans l'eau dessous (UW); l'orifice de l'atomiseur (3) étant monté vis-à-vis de la bouche de la conduite (4) destinée à l'élimination des agents toxiques (Ill. 2).

3. Mécanisme de distillation à vide destiné à l'execution d'un procédé selon revendication 1, caracterisé en ce qu'à l'aide d'au moins un atomiseur (3), le mélange liquide peut être améné à un réservoir (1), dans lequel débouche une conduite (4) rattachable à une source de vide, p.e. une pompe à faire le vide (5), pour éliminer les agents toxiques avec la vapeur du liquide original comme gaz porteur; le réservoir étant en outre équipé d'une conduite de décharge (6) pour le liquide purifié; cette conduite de décharge (6), dans laquelle, le cas échéant, peut être installée une pompe aspirante (7), débouche dans l'eau dessous (UW); le réservoir (1) étant développé en tant que chambre à vide avec un arrangement des injecteurs chargé du mélange liquide de façon semblable à une pompe à diffusion et la conduite de décharge (6) dans la partie à côté de la chambre à vide étant développée en tant que diffuseur.

**Claims**

1. Process for the purpose of separating the components of polluted fluids, in particular for eliminating toxic agents, such as carbohydrates, types of phenol etc, from water, characterised in that the fluid is directly sprayed from the feeding pipe into a vacuum chamber in order to concentrate the toxic agents; thus, the fluid is brought to boiling point and the toxic agents are eliminated immediately together with the vapour of the original fluid as a carrier gas, while the purified fluid is channeled off.

2. Vacuum distilling device for executing a process according to claim 1, characterised in that the fluid mixture can be fed into a container (1) via at least one atomizer jet (3); this container is connected to a pipe (4) that can be brought into contact with a vacuum source, e.g. a vacuum pump (5), for the purpose of eliminating the toxic agents together with the vapour of the original fluid as a carrier gas; the container (1) being furthermore equipped with a discharge pipe (6) for the purified fluid, whereby the discharge pipe (6), which can if necessary contain a suction pump (7), is connected to the water below (UW), and the atomizer jet (3) faces the mouth of the pipe (4) for eliminating the toxic agents (Fig. 2).

3. Vacuum distilling device for executing a process according to claim 1, characterised in that the fluid mixture, via at least one atomizer jet (3), can be fed into a container (1) which is connected to a pipe (4) that can be brought into contact with a vacuum source, e.g. a vacuum pump (5), for the purpose of eliminating the toxic agents together with the vapour of the original fluid as a carrier gas; the container (1) being furthermore equipped with a discharge pipe (6) for the purified fluid, whereby the discharge pipe (6), which can if necessary contain a suction pump (7), is connected to the water below (UW), and the container is developed as a vacuum chamber with an injector arrangement similar to a water-jet vacuum pump, into which the fluid mixture is fed; the discharge pipe (6) leading to the area next to the vacuum chamber is developed as a diffusor.

FIG.1

FIG.2

FIG.3

FIG.4

FIG.5